# EUROPÄISCHE PATENTSCHRIFT

(11) **EP 3 666 459 B1**
(45) Veröffentlichungstag und Bekanntmachung des Hinweises auf die Patenterteilung: **11.11.2020**
(21) Anmeldenummer: 19213126.6
(22) Anmeldetag: 03.12.2019
(51) Int. Cl.: B24B 53/07, B24B 53/075, B23F 23/12, B24B 53/12, B24B 53/095

(54) **VERFAHREN ZUM ABRICHTEN EINER ROTIERENDEN SCHLEIFSCHNECKE**
METHOD OF DRESSING A ROTATING GROOVE
PROCÉDÉ DE DRESSAGE D'UNE VIS DE RECTIFICATION ROTATIVE

(30) Priorität: 11.12.2018 EP 18211493
(43) Veröffentlichungstag der Anmeldung: 17.06.2020
(73) Patentinhaber: Burri Werkzeugmaschinen GmbH & Co. KG, 78667 Villingendorf (DE)
(72) Erfinder: Burri, Dieter, 78662 Bösingen (DE)
(74) Vertreter: Klocke, Peter

(56) Entgegenhaltungen:
- EP-A2- 1 987 920
- DE-A1-102004 020 947
- DE-A1-102008 053 021
- DE-U1-202007 013 779

## Beschreibung

Die vorliegende Erfindung betrifft ein Verfahren zum Abrichten einer um eine Rotationsachse rotierende Schleifschnecke oder Schleifscheibe zum Schleifen eines Zahnrades oder zahnradähnlichen Werkstücks mit einem zahnförmigen Profil, die zumindest teilweise aus einem abrichtbaren Abrasivmaterial besteht, in dem zum Abrichten mittels einer Schneide auf die Flanken des zahnförmigen Profils der Schleifschnecke zugefahren, diese abgerichtet und nach dem Abrichten von der Schleifschnecke weggefahren wird.

Bei dem Herstellen von Zahnrädern kommt dem abschließenden Bearbeitungsprozess eine wichtige Bedeutung zu. Bei diesem werden die Zahnflanken einer Schleifoperation unterzogen, mit der sie auf die genaue Kontur gebracht werden. Um eine hinreichende Qualität der Verzahnung zu erreichen, müssen die Arbeitsflächen der Schleifschnecke, die auch als Schleifscheibe bezeichnet wird, nach einer gewissen Anzahl von geschliffenen Werkstücken erneut auf die gewünschte Form gebracht werden. Bei den Arbeitsflächen der Schleifschnecke handelt es sich um das zahnförmige Profil der Schleifschnecke. Hierfür ist ein Abrichtvorgang erforderlich. Hierbei muss nicht nur das zahnförmige Profil, also der Schneckengang der Schleifschnecke profiliert werden, sondern es ist zumindest in gewissen zeitlichen Abständen auch erforderlich, die Außenumfangsflächen der Schleifschnecke zu profilieren.

Die DE 10 2004 020 947 A1 offenbart ein rotierbares mit Hartstoffkörnern belegtes Abrichtwerkzeug zum Profilieren einer vielgängigen Schleifschnecke für das kontinuierliche Wälzschleifen vorzugsweise kleinmoduliger Verzahnungen, das einen Überdrehbereich, einen Vorprofilierbereich und einen Feinprofilierbereich aufweist. Die Profilierbereiche werden nach dem Schwenken in ihre Abrichtstellung um eine zur Rotationsachse des Abrichtwerkzeugs senkrechte Schwenkachse mit der Schleifschnecke nacheinander in Eingriff gebracht.

Aus der EP 1 987 920 A1 ist eine Schleifmaschine bekannt, die eine Abrichtleiste umfasst, die eine Abrichtkante aufweist, deren Form der Soll-Hüllkurve der Schleifschnecke entspricht, wobei die Abrichtleiste eine Länge hat, die mindestens der Breite der Schleifschnecke entspricht. Die Abrichtleiste und die Rotationsachse der Schleifschnecke sind parallel angeordnet.

Bei diesem bekannten Verfahren ist es zum einen erforderlich, eine Abrichtleiste zu verwenden, die der Soll-Hüllkurve entspricht und darüber hinaus mindestens der Länge der Schleifschnecke entspricht. Da über die gesamte Fläche gleichzeitig geschliffen wird, ist es erforderlich, zur Kühlung eine sehr breite Öldüse vorzusehen. Darüber hinaus ist die Abrichtleiste aufgrund ihrer Länge und der üblicherweise Bestückung mit Diamanten entsprechend aufwändig.

Der vorliegenden Erfindung liegt daher die Aufgabe zugrunde, eine Möglichkeit vorzuschlagen, bei der das Abrichten gegenüber dem Stand der Technik verbessert ist und zusätzlich eine Durchmesserbestimmung der Schleifschnecke erfolgen kann.

Diese Aufgabe wird erfindungsgemäß durch ein Verfahren mit den Merkmalen des Anspruchs 1 gelöst. Weitere vorteilhafte Ausgestaltungen sind den Unteransprüchen zu entnehmen.

Gemäß der Erfindung wird nach dem Abrichten der Flanken zum Überdrehen der Schleifschnecke ein Überdrehlineal mit einem Winkel ϕ zur Rotationsachse der Schleifschnecke angeordnet und die rotierende Schleifschnecke bei Kontakt mit dem Überdrehlineal relativ zu dem Überdrehlineal bewegt. Bei dem Überdrehlineal handelt es sich um ein mit Diamanten bestücktes glattes Lineal, mit dem einzig und allein die Außenumfangsfläche der Schleifschnecke nach dem die Flanken bearbeitet wurden, abgerichtet werden. Das Überdrehlineal braucht bei dieser Ausführung nicht die Länge der Schleifschnecke aufzuweisen. Die Länge für eine vollständige Abdeckung der Schleifschnecke während des Schleifvorganges entspricht der Länge der Schleifschnecke multipliziert mit dem Kosinus des Winkels ϕ. Entscheidend ist, dass die Rotationsachse der Schleifschnecke in einem Winkel ungleich Null zu dem Überdrehlineal steht, wobei dies entweder durch eine entsprechende Verstellung des Überdrehlineals oder der Rotationsachse der Schleifschnecke erfolgen kann. Der Winkel ϕ liegt vorzugsweise in einem Bereich zwischen 20 bis 30 Grad und sollte sinnvollerweise 70 Grad nicht überschreiten. Durch diese Anordnung liegt das Überdrehlineal tangential an der Schleifschnecke an und berührt diese nur in einem schmalen Bereich, wobei durch die Relativbewegung zwischen der Schleifschnecke und dem Überdrehlineal dieser schmale Bereich entlang der Länge des Überdrehlineals sich entlang bewegt. Damit wird das Überdrehlineal über die gesamte Länge gleichmäßig beaufschlagt und ggf. abgenutzt und eine Kühlung ist nur in dem Bereich erforderlich, in dem eine Berührung zwischen dem Überdrehlineal und der Schleifschnecke erfolgt.

Vorteilhafterweise wird die Schleifschnecke aus ihrer Ursprungsposition, in der das Abrichten der Zahnflanken erfolgt, mit ihrer Rotationsachse um den Winkel ϕ in die Schleifposition für das Überdrehen gekippt und gemäß einer weiteren vorteilhaften Ausgestaltung die Schleifschnecke senkrecht zur Längsachse des Überdrehlineals bewegt. Dies ist seitens der Maschinensteuerung und des Aufbaus der Schleifmaschine leicht und kostengünstig zu realisieren.

Gemäß einer weiteren bevorzugten Ausbildung des Verfahrens wird mit der Schleifschnecke eine Öldüse über den Berührungspunkt der Schleifschnecke mit dem Überdrehlineal bewegt, so dass nur über einen schmalen Bereich eine Ölkühlung durchgeführt wird.

Gemäß einer weiteren vorteilhaften Ausgestaltung des Verfahrens zum Abrichten wird vor dem Abrichten das Überdrehlineal zur Durchmesserkontrolle verwendet. Dabei wird die Schleifschnecke aus ihrer Ursprungsposition auf Anschlag gegen das Überdrehlineal gefahren, die Position der Schleifschnecke ermittelt und anschließend die Schleifschnecke wieder in ihre Ursprungsposition zurückgefahren. Damit kann auf einfache Weise vor dem Abrichtvorgang der Durchmesser der Schleifschnecke ermittelt und gemäß einer bevorzugten Ausbildung unter Berücksichtigung des ermittelten Durchmessers die optimale Drehgeschwindigkeit errechnet und eingestellt werden, da die Umfangsgeschwindigkeit an der Schleifschnecke für den Abrichtvorgang von wesentlicher Bedeutung ist.

Mit dem erfindungsgemäßen Verfahren ist es somit möglich, den gesamten Abrichtvorgang gegenüber dem Stand der Technik zu verbessern und auch zeitlich zu verkürzen. Dies ist deshalb möglich, da durch die genaue Feststellung des Durchmessers der Bediener den Durchmesser der Schleifschnecke nach dem Scheibenwechsel nicht mehr eingeben muss und dadurch automatisch die maximale Schnittgeschwindigkeit (Drehzahl) der Schleifschnecke an der Maschine festgelegt wird. Beim automatischen Einfädeln der Schleifschnecke in die Abrichtleiste kann über Körperschallfunktionen schon im Eilgang sehr nah bis an die Abrichtleiste herangefahren werden, so dass sich dadurch die Einfädelzeit erheblich verkürzt. Darüber hinaus ermöglicht das erfindungsgemäße Verfahren eine Reduzierung des Aufwandes für die Kühlung und eine gleichmäße Abnutzung der Überdrehleiste.

Nachfolgend wird die Erfindung anhand der Figuren näher erläutert. Es stellen dar:
- Figur 1: eine schematische Darstellung der Anordnung der Schleifschnecke zu dem Überdrehlineal in der Grundposition in der Draufsicht (Figur 1A) und in der Seitenansicht (Figur 1 B) sowie in Figur 1C in der Messposition and dem Überdrehlineal;
- Figur 2: die Anordnung der Schleifschnecke für den Überdrehvorgang und die Bewegung der Schleifschnecke relativ zu dem Überdrehlineal in drei verschiedenen Positionen (Figur 2A, Figur 2B, Figur 2C).

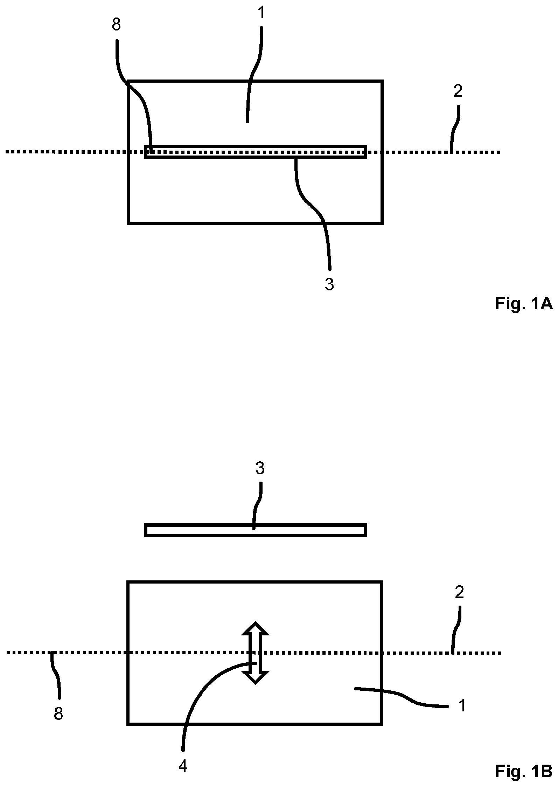

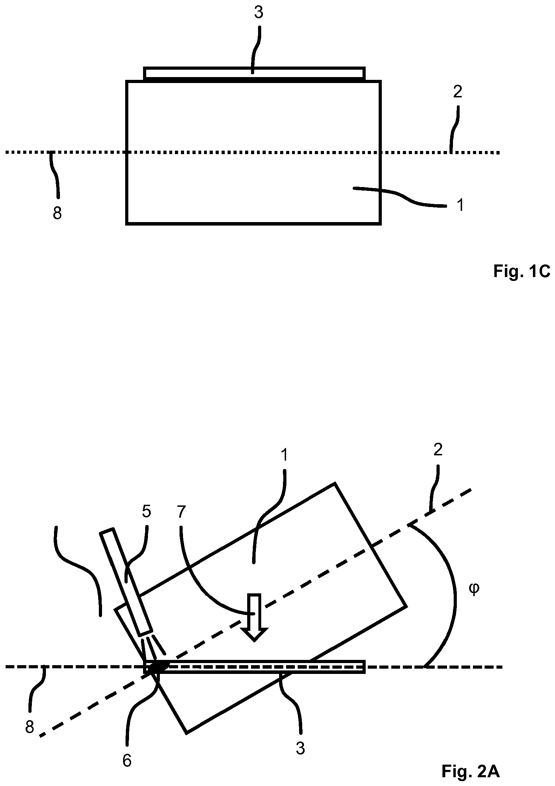

In der Figur 1 wird die Schleifschnecke 1 mit ihrer Rotationsachse 2 in waagrechter Anordnung gezeigt. Grundsätzlich ist die gleiche Anordnung auch um 90° gedreht in senkrechter Anordnung möglich. Die Schleifschnecke 1 befindet sich in den Figuren 1A und 1B in ihrer Grundstellung und wird in dieser Lage gemäß Figur 1A zu dem Überdrehlineal 3 senkrecht zur Zeichenebene herangefahren und aus der Wegstrecke bis zum Überdrehlineal 3 der Durchmesser der Schleifschnecke 1 ermittelt. Anschließend wird die Schleifschnecke 1 wieder in ihre Ursprungsposition zurückgefahren. Dies ist in den Figuren 1B und 1C in der Seitenansicht schematisch dargestellt und die Bewegung der Schleifschnecke 1 zu und weg von dem Überdrehlineal 3 durch den Pfeil 4 angedeutet.

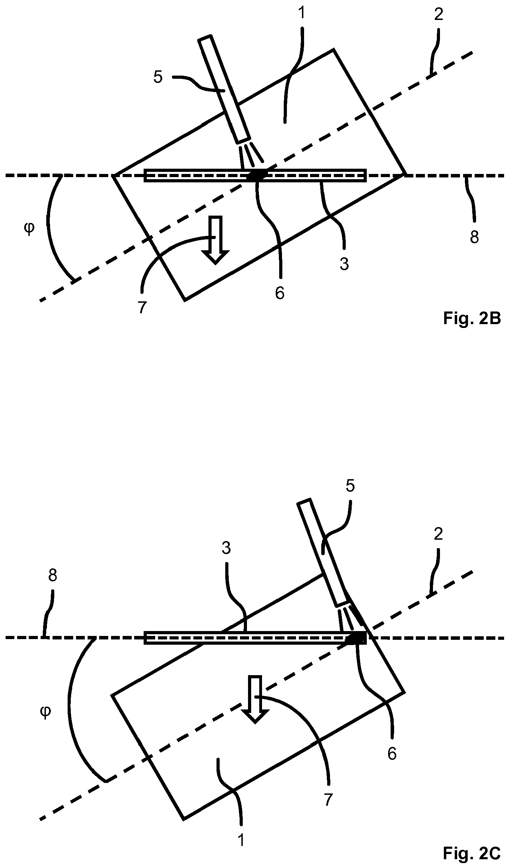

Figur 2 zeigt die um ihre Rotationsachse 2 um den Winkel ϕ (hier 30°) gegenüber ihrer Grundposition gemäß Figur 1A bzw. gegenüber der Längsachse 8 des Überdrehlineals 3 gekippte Schleifschnecke 1 mit einer Öldüse 5, die genau sich in dem Bereich des Berührungspunktes 6 befindet. Wie aus den Figuren 2A bis 2C ersichtlich, wird die Schleifschnecke 1 entlang dem Pfeil 7 relativ zu dem Überdrehlineal 3 bewegt, wobei die Länge des Überdrehlineals 3 in diesem Ausführungsbeispiel dem 0,87-fachen (entspricht cos 30°) der Länge der Schleifschnecke 1 beträgt. Es ist ersichtlich, wie der Berührungspunkt 6 und auch die Öldüse 5 mit der Bewegung wandert. Selbstverständlich kann auch kinematisch umgekehrt, allerdings aufwändiger, bewegt werden. Figur 2A zeigt die Stellung und Anordnung der Schleifscheibe 1 zu dem Überdrehlineal 3 der Startstellung, Figur 2B in der Mitte und Figur 2C am Ende.

## Patentansprüche

1. Verfahren zum Abrichten einer um eine Rotationsachse rotierenden Schleifschnecke (1) oder Schleifscheibe zum Schleifen eines Zahnrades oder zahnradähnlichen Werkstücks mit einem zahnförmigen Profil, die zumindest teilweise aus einem abrichtbaren Abrasivmaterial besteht, in dem zum Abrichten mittels einer Schneide auf die Flanken des zahnförmigen Profils der Schleifschnecke (1) zugefahren, diese abgerichtet und nach dem Abrichten von der Schleifschnecke (1) weggefahren wird, **dadurch gekennzeichnet, dass** nach dem Abrichten zum Überdrehen der Schleifschnecke (1) ein Überdrehlineal (3) mit einem Winkel ϕ ungleich Null zur Rotationsachse (2) der Schleifschnecke (1) angeordnet und die rotierenden Schleifschnecke (1) bei Kontakt mit dem Überdrehlineal (3) relativ zu dem Überdrehlineal (3) bewegt wird.

2. Verfahren nach Anspruch 1, **dadurch gekennzeichnet, dass** die Schleifschnecke (1) aus einer Ursprungsposition mit ihrer Rotationsachse (2) um den Winkel ϕ in eine Schleifposition für das Überdrehen gekippt wird.

3. Verfahren nach Anspruch 2, **dadurch gekennzeichnet, dass** die Schleifschnecke (1) senkrecht zur Längsachse (8) des Überdrehlineals (3) bewegt wird.

4. Verfahren nach einem der vorangegangenen Ansprüche, **dadurch gekennzeichnet, dass** mit der Schleifschnecke (1) eine Öldüse (5) über einem Berührungspunkt (6) der Schleifschnecke (1) mit dem Überdrehlineal (3) bewegt wird.

5. Verfahren nach einem der vorangegangenen Ansprüche, **dadurch gekennzeichnet, dass** als Überdrehlineal (3) ein über die gesamte Berührungsfläche mit Diamanten bestücktes Diamantlineal verwendet wird.

6. Verfahren nach einem der vorangegangenen Ansprüche, **dadurch gekennzeichnet, dass** vor dem Abrichten das Überdrehlineal (3) zur Durchmesserkontrolle verwendet wird, indem die Schleifschnecke (1) aus ihrer Ursprungsposition auf Anschlag gegen das Überdrehlineal (3) gefahren wird, die Position der Schleifschnecke (1) ermittelt und anschließend die Schleifschnecke (1) wieder in ihre Ursprungsposition verfahren wird.

7. Verfahren nach Anspruch 6, **dadurch gekennzeichnet, dass** unter Berücksichtigung des ermittelten Durchmessers die optimale Drehgeschwindigkeit errechnet und eingestellt wird.

## Claims

1. Method for dressing a grinding worm (1) or grinding wheel which rotates about an axis of rotation and is intended for grinding a gear or gear-like workpiece having a tooth-shaped profile, which grinding worm or grinding wheel consists at least in part of a dressable abrasive material, in which method, for dressing, a cutting edge is moved towards the flanks of the tooth-shaped profile of the grinding worm (1), the grinding worm is dressed, and after dressing the cutting edge is moved away from the grinding worm (1), **characterised in that,** after the dressing process, in order to strip the grinding worm (1), a stripping ruler (3) is arranged at an angle ϕ not equal to zero to the axis of rotation (2) of the grinding worm (1) and the rotating grinding worm (1) is moved relative to the stripping ruler (3) upon contact with the stripping ruler (3).

2. Method according to claim 1, **characterised in that** the grinding worm (1) is tilted together with its axis of rotation (2) out of an original position by the angle ϕ into a grinding position for stripping.

3. Method according to claim 2, **characterised in that** the grinding worm (1) is moved perpendicularly to the longitudinal axis (8) of the stripping ruler (3).

4. Method according to any of the preceding claims, **characterised in that** an oil nozzle (5) is moved together with the grinding worm (1) over a point of contact (6) between the grinding worm (1) and the stripping ruler (3).

5. Method according to any of the preceding claims, **characterised in that** a diamond ruler which is fitted with diamonds over the entire contact surface is used as the stripping ruler (3).

6. Method according to any of the preceding claims, **characterised in that,** before the dressing process, the stripping ruler (3) is used to check the diameter by the grinding worm (1) being moved out of its original position to come to a stop against the stripping ruler (3), the position of the grinding worm (1) being determined and then the grinding worm (1) being moved back into its original position.

7. Method according to claim 6, **characterised in that,** by taking into account the determined diameter, the optimum rotational speed is calculated and set.

## Revendications

1. Procédé de dressage d'une vis sans fin de meulage (1) ou d'un disque de meulage doté(e) d'un profil en forme de dents, qui tourne autour d'un axe de rotation, est dévolu(e) au meulage d'une roue dentée ou d'une pièce du type roue dentée et est constitué(e), au moins en partie, d'un matériau abrasif apte au dressage, procédé dans lequel, en vue du dressage au moyen d'un tranchant, il s'opère un mouvement de présentation aux flancs du profil en forme de dents de la vis sans fin de meulage (1), cette dernière est dressée et, une fois le dressage effectué, il s'opère un mouvement d'éloignement d'avec ladite vis sans fin de meulage (1), **caractérisé par le fait qu'**à l'issue du dressage, en vue de rectifier la vis sans fin de meulage (1), une barrette de reprise (3) est disposée suivant un angle ϕ différant de zéro par rapport à l'axe de rotation (2) de la vis sans fin de meulage (1), et un mouvement est imprimé à ladite vis sans fin de meulage (1) en rotation, par rapport à la barrette de reprise (3), lors d'un contact avec ladite barrette de reprise (3).

2. Procédé selon la revendication 1, **caractérisé par le fait que** la vis sans fin de meulage (1) est basculée de l'angle ϕ par son axe de rotation (2), à partir de son emplacement initial, vers un emplacement de meulage dévolu à la rectification.

3. Procédé selon la revendication 2, **caractérisé par le fait qu'**un mouvement est imprimé à la vis sans fin de meulage (1) perpendiculairement à l'axe longitudinal (8) de la barrette de reprise (3).

4. Procédé selon l'une des revendications précédentes, **caractérisé par le fait qu'**un mouvement est imprimé à un gicleur d'huile (5), conjointement à la vis sans fin de meulage (1), au-dessus d'un point (6) de contact de ladite vis sans fin de meulage (1) avec la barrette de reprise (3).

5. Procédé selon l'une des revendications précédentes, **caractérisé par le fait qu'**une barrette diamantée, garnie de diamants sur toute la surface de contact, est utilisée en tant que barrette de reprise (3).

6. Procédé selon l'une des revendications précédentes, **caractérisé par le fait que**, préalablement au dressage, la barrette de reprise (3) est utilisée pour contrôler le diamètre en déplaçant la vis sans fin de meulage (1) à partir de son emplacement initial, jusqu'à la venue en butée contre la barrette de reprise (3), en spécifiant l'emplacement de ladite vis sans fin de meulage (1), puis en ramenant ladite vis sans fin de meulage (1) à son emplacement initial.

7. Procédé selon la revendication 6, **caractérisé par le fait que** la vitesse de rotation optimale est calculée et réglée avec prise en compte du diamètre spécifié.
